# FASCICULE DE BREVET EUROPEEN

(11) **EP 0 956 236 B1**
(45) Date de publication et mention de la délivrance du brevet: **08.08.2001**
(21) Numéro de dépôt: 98905458.0
(22) Date de dépôt: 29.01.1998
(51) Int. Cl.: B64G 1/64, B64G 1/22, F16F 9/04, F16F 9/10

(54) **DISPOSITIF DE SUSPENSION D'UNE CHARGE UTILE DANS UN LANCEUR SPATIAL**
VORRICHTUNG ZUM AUFHÄNGEN EINER NUTZLAST IN EINER TRÄGERRAKETE
DEVICE FOR SUSPENSION OF A PAYLOAD IN A SPACE LAUNCH

(30) Priorité: 29.01.1997 FR 9700949
(43) Date de publication de la demande: 17.11.1999
(73) Titulaire: CENTRE NATIONAL D'ETUDES SPATIALES, 75001 Paris (FR)
(72) Inventeur: HUBERT, Pascal, Marie-Dominique, F-63170 Perignat les Sarlieve (FR)
(74) Mandataire: Colas, Jean-Pierre
(86) Numéro de dépôt international: FR9800167
(87) Numéro de publication internationale: WO9832658

(56) Documents cités:
- EP-A- 0 727 351
- GB-A- 252 843
- GB-A- 2 029 546
- US-A- 4 848 525
- PATENT ABSTRACTS OF JAPAN vol. 3, no. 69 (M-62), 14 juin 1979 & JP 54 047075 A (TOKYO SHIBAURA DENKI K.K.), 13 avril 1979,

## Description

La présente invention est relative à un dispositif de suspension d'une charge utile, et, plus particulièrement, à un tel dispositif installé dans un lanceur de ladite charge utile dans l'espace. Dans la suite, l'expression "charge utile" couvre aussi bien un satellite qu'un véhicule de transport d'équipage ou de fret, ou encore un élément de station orbitale, ceci de manière non limitative.

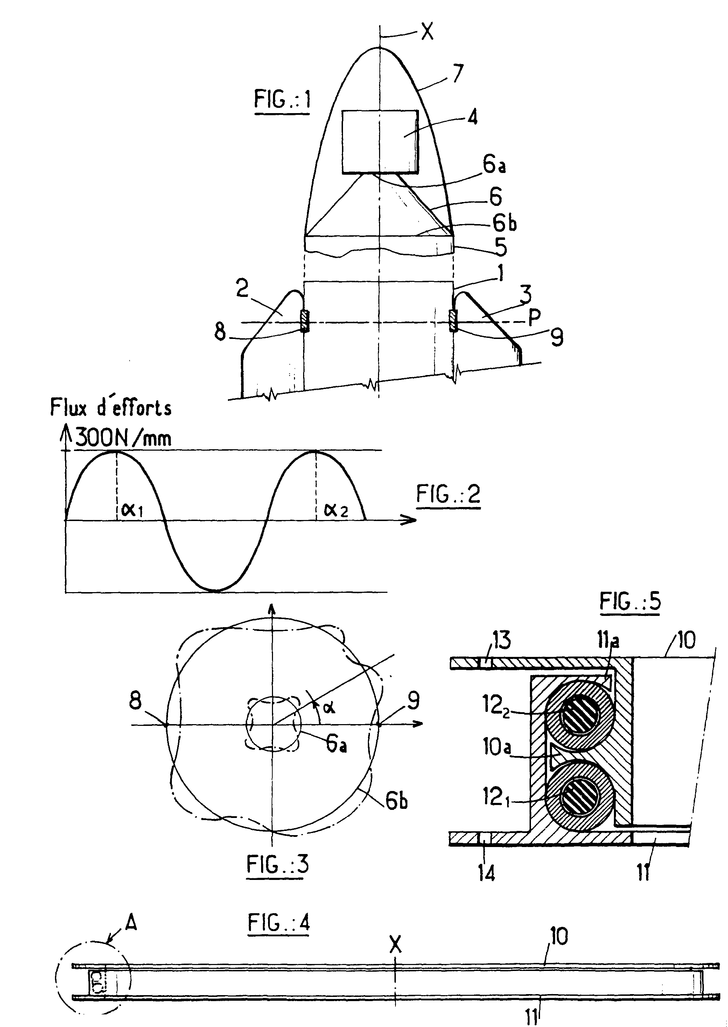

Un lanceur d'engin spatial tel qu'un satellite comprend classiquement plusieurs étages propulseurs activés successivement pendant la phase de lancement. Pour accroître la puissance du lanceur lorsque celui-ci doit placer sur orbite une charge utile particulièrement importante, une solution consiste à monter sur le premier étage propulseur du lanceur des propulseurs auxiliaires, couramment appelés "boosters". On a schématisé à la figure 1 du dessin annexé une partie d'un tel lanceur dont le premier étage 1 est équipé de deux propulseurs auxiliaires 2 et 3 fixés dans des positions diamétralement opposées sur l'enveloppe de l'étage, parallèlement à l'axe longitudinal X de celui-ci. On a également schématisé à la figure 1 un satellite 4 monté sur un deuxième étage 5 du lanceur, par l'intermédiaire d'un adaptateur en forme de jupe tronconique 6, le satellite étant protégé classiquement par une coiffe 7 pendant la traversée de l'atmosphère.

Quand les propulseurs auxiliaires 2 et 3 fonctionnent, lors d'un lancement, les poussées qu'ils développent appliquent à l'enveloppe du premier étage 1 des efforts intenses, de l'ordre de plusieurs centaines de tonnes par exemple, en particulier au niveau des points d'attache 8, 9 des propulseurs 2, 3 respectivement, sur ce premier étage.

Le graphe de la figure 2 représente la distribution de ces efforts sur l'enveloppe du premier étage, dans un plan P passant par les points d'attache 8 et 9. Plus précisément, les ordonnées représentent les "flux" d'efforts subis par l'enveloppe (en N/mm de sa circonférence), en tout point de cette circonférence d'abscisse angulaire α dans le plan P (0 ≤ α ≤ 2π).

Aux points d'abscisses angulaires α₁ et α₂ correspondant à celles des points d'attache 8 et 9 des propulseurs auxiliaires sur le premier étage 1, on observe des maxima, ou "surflux", prononcés pour ces flux d'efforts, de l'ordre de 300 N/mm par exemple. Il en résulte une forte non uniformité de ces flux suivant la circonférence de l'étage 1, à l'origine de déformations asymétriques de l'enveloppe de l'étage, déformations qui peuvent même varier dans le temps.

On a représenté (en trait interrompu) à la figure 3 des déformations typiques (très exagérées pour la clarté du dessin) qu'on peut observer sur la petite base 6a et sur la grande base 6b de la jupe 6, comme conséquence de la transmission à cette jupe des déformations subies par l'enveloppe du premier étage 1, elles-mêmes transmises à l'enveloppe du deuxième étage 5 qui supporte ladite jupe.

On voit que la petite base 6a de la jupe 6 subit des déformations dont il est clair qu'elles peuvent perturber gravement la structure et le fonctionnement du satellite 4 monté sur cette jupe.

Par ailleurs, lors des diverses séparations des étages du lanceur, de la coiffe ou du satellite, des chocs d'intensité importante peuvent se propager dans la structure du lanceur et du satellite. De même, il existe durant tout le vol des vibrations dues aux variations de poussée, aux allumages et extinctions de moteur. Il est clair que ces chocs et vibrations sont eux aussi susceptibles de perturber le fonctionnement du lanceur et des satellites embarqués.

S'il n'est pas possible d'empêcher la génération des surflux d'efforts, des chocs ou des vibrations évoqués ci-dessus, il convient de faire en sorte que ceux-ci soient sans effet sensible sur la structure et le fonctionnement du lanceur et du, ou des, satellites embarqués. En ce qui concerne ces derniers en particulier, il convient que la petite base 6a de la jupe 6 qui porte le satellite 4 ne subisse pas des déformations ou des pics d'effort sensibles susceptibles de perturber le fonctionnement du satellite.

Pour ce faire, suivant une technique connue, on renforce la jupe 6, à proximité de sa petite base 6a, avec un cadre de renfort annulaire en fibres de carbone très rigide, fixé sur sa face intérieure. L'utilisation d'un seul tel cadre, lourd et coûteux, s'est avérée insuffisante. En effet des constructeurs de satellites n'admettent pas un pic de flux d'efforts supérieur à 10 N/mm au niveau de la base du satellite. On a constaté que cette contrainte posée dans le cahier des charges ne pouvait être satisfaite qu'en disposant dans la jupe au moins deux tels renforts et non un seul, ce qui rend cette solution encore plus coûteuse.

En outre, ces renforts sont spécifiques à une jupe adaptatrice particulière, adaptée à un satellite particulier à mettre sur orbite. Il faut alors construire et installer autant de renforts spécifiques qu'il y a de types de jupes adaptatrices à monter, ce qui renchérit encore le coût de l'utilisation de renforts.

En ce qui concerne les chocs et les vibrations générés lors des séparations des étages du lanceur, les solutions préconisées par la technique antérieure consistent essentiellement à réduire les charges pyrotechniques mises en jeu lors desdites séparations, ou les épaisseurs des éléments que ces charges ont pour but de découper. Une autre mesure proposée consiste à doubler l'enveloppe ou la coque du lanceur avec des garnitures en matériaux élastomères pour dissiper l'énergie des chocs. Ces solutions présentent les inconvénients d'être coûteuses et de mise en oeuvre difficile.

On connaît en outre du document EP-A-0 727 351 un dispositif de suspension d'une charge utile dans un lanceur conforme au préambule de la revendication 1.

La présente invention a donc pour but de réaliser un dispositif conçu pour être monté entre un élément de lanceur et un satellite transporté par ce lanceur, ce dispositif étant léger et propre à empêcher la transmission au satellite de surflux d'efforts, de chocs ou de vibrations susceptibles de déranger sa structure et/ou son fonctionnement.

La présente invention a aussi pour but de réaliser un tel dispositif qui assure entre le lanceur et le satellite, ou entre le lanceur et un élément de ce dernier supportant le satellite, une liaison suffisamment rigide pour maintenir leur assemblage, présentant une bonne tenue aux efforts appliqués par le satellite lui-même.

La présente invention a encore pour but de réaliser un tel dispositif de suspension qui soit de fonctionnement sûr et tolérant vis-à-vis des pannes. C'est là une contrainte importante dans l'industrie spatiale où l'on s'efforce de faire en sorte qu'une panne d'un organe de lanceur ne mette pas en péril l'ensemble d'une mission.

On atteint ces buts de l'invention, ainsi que d'autres qui apparaîtront à la lecture de la description qui va suivre, avec un dispositif de suspension d'une charge utile dans un lanceur de ladite charge utile dans l'espace, ce dispositif étant remarquable en ce qu'il comprend a) au moins une chambre annulaire à fluide à géométrie variable installée entre ledit lanceur et ladite charge utile et b) des premier et deuxième organes rigides fixés, de part et d'autre de ladite chambre, à ladite charge utile et au lanceur, respectivement, de manière à transmettre des efforts entre ceux-ci à travers ladite chambre.

Comme on le verra plus loin, les surflux d'efforts localisés qui atteignent le dispositif sont délocalisés et donc fortement atténués et répartis sur toute l'extension de la chambre par le volume isobare du fluide contenu dans la chambre.

Suivant d'autres caractéristiques du dispositif selon l'invention, ladite chambre annulaire à fluide et lesdits premier et deuxième organes rigides de couplage sont coextensifs et coaxiaux à un axe longitudinal commun au lanceur et à la charge utile. Avantageusement, lesdits premier et deuxième organes rigides annulaires de couplage comportent chacun au moins une nervure externe et interne respectivement, séparées axialement par ladite chambre à fluide annulaire.

Suivant un premier mode de réalisation de l'invention, la chambre annulaire à fluide est à paroi souple.

Suivant une première variante, les nervures desdits premier et deuxième organes rigides annulaires s'imbriquent les unes dans les autres avec interposition de ladite chambre à fluide entre les faces de chacune des paires de faces en regard desdites nervures imbriquées.

Suivant encore une deuxième variante, le dispositif comprend au moins des premier et deuxième chambres à fluide annulaires superposées axialement, les nervures en regard des organes annulaires rigides comprimant la première ou la deuxième chambre, respectivement, quand lesdits organes rigides subissent des efforts tendant à les rapprocher ou à les écarter l'un de l'autre, respectivement.

Suivant encore une troisième variante, le dispositif comprend au moins une troisième chambre à fluide coaxiale aux deux autres, disposée symétriquement à la première par rapport à la deuxième et fonctionnant comme la première.

Suivant encore un autre mode de réalisation de l'invention, le dispositif comprend une quatrième chambre à fluide coaxiale aux autres et disposée symétriquement à la deuxième par rapport à la troisième et fonctionnant comme la deuxième.

Suivant un deuxième mode de réalisation de l'invention, la chambre annulaire à fluide est délimitée par des surfaces complémentaires des premier et deuxième organes mobiles, ces organes étant mobiles l'un par rapport à l'autre suivant l'axe longitudinal du lanceur.

Le dispositif peut comprendre encore des moyens pour régler la pression d'un fluide gazeux contenu dans une chambre à fluide, ou des moyens pour mettre sélectivement en communication au moins une chambre refermant un fluide incompressible avec une capacité contenant un fluide compressible.

Comme on le verra plus loin, ces moyens permettent de donner au dispositif suivant l'invention une souplesse, une rigidité ou une capacité d'amortissement adaptée à tels ou tels efforts, vibrations ou chocs subis par le lanceur et le satellite pendant un lancement.

D'autres caractéristiques et avantages de la présente invention apparaîtront à la lecture de la description qui va suivre et à l'examen du dessin annexé dans lequel :
- la figure 1 est une vue schématique en élévation d'un lanceur de satellites d'un type connu, susceptible d'être équipé du dispositif de suspension suivant la présente invention,
- la figure 2 est un graphe et la figure 3 un schéma utilisé dans le préambule de la présente description, avec la figure 1, pour présenter les problèmes résolus par la présente invention,
- la figure 4 est un schéma d'un mode de réalisation du dispositif suivant l'invention, en coupe axiale,
- la figure 5 représente le détail A de la figure 4,
- les figures 6 à 8 sont des représentations partielles, analogues au détail A, de variantes du dispositif des figures 4 et 5,
- la figure 9 est un schéma partial d'un autre mode de réalisation du dispositif suivant l'invention,
- la figure 10 est un schéma d'une variante du dispositif de la figure 9, et
- les figures 11 et 12 sont des schémas de moyens de réglage de la pression d'un fluide incompressible et d'un gaz, respectivement, contenu dans au moins une des chambres à fluide du dispositif suivant l'invention.

On se réfère aux figures 4 et 5 du dessin annexé où l'on a représenté un premier mode de réalisation du dispositif de suspension suivant l'invention, qui comprend essentiellement deux organes rigides annulaires, ou bagues, 10 et 11, réalisés en un matériau métallique par exemple, et des première et deuxième chambres, ou gaines, à fluide liquide ou gazeux sous pression 12₁,12₂, annulaires, installées à la périphérie des bagues 10 et 11, entre celles-ci. Les bagues 10,11 et les chambres 12₁,12₂ sont ainsi coextensives, c'est-à-dire qu'elles s'étendent dans l'espace sensiblement parallèlement les unes aux autres. Les chambres ou gaines sont délimitées par une paroi souple, déformable sous des efforts d'écrasement.

Plus précisément, des nervures annulaires 10a, 11a externe et interne respectivement, débordent de la périphérie des bagues 10 et 11 respectivement, de manière que chacune des chambres 12₁, 12₂ soit pincée, radialement et axialement, soit entre deux nervures comme la chambre 12₁, soit entre une nervure 10a et la base de la bague 11, comme la chambre 12₂. Les chambres sont ainsi imbriquées dans les bagues 10 et 11 de manière à participer à leur assemblage.

Il est clair d'ailleurs que les nervures 10a et 11a empêchent que l'on puisse procéder à cet assemblage par montage des bagues 10 et 11 entières l'une sur l'autre. En fait, chacune des bagues est divisée en plusieurs éléments, par exemple trois éléments en forme d'arc de 120°. Les éléments des deux bagues sont garnis des chambres 12₁, et 12₂ puis imbriqués les uns dans les autres comme représenté à la figure 5. Enfin, les éléments de chaque bague sont raccordés bout à bout par tout moyen de fixation convenable.

Le dispositif ainsi constitué peut être installé (voir figure 1) entre un satellite 4 et une jupe adaptatrice 6, au niveau de la base 6a de cette jupe ou sur le satellite lui-même. Il peut aussi être installé entre l'étage 5 et la grande base 6b de la jupe 6.

Les bagues 10 et 11 sont fixées alors respectivement sur le satellite 4 et sur la jupe 6, ou sur la jupe 6 et l'étage 5, par exemple à l'aide de boulons passant dans des passages tels que 13 et 14 distribués sur toute la périphérie des bagues 10 et 11.

On comprend que lorsque le dispositif subit des efforts tendant à rapprocher les deux bagues 10 et 11 l'une de l'autre, suivant l'axe X de ces bagues, la chambre 12₂ est comprimée entre une face de la nervure 10a et la bague 11. A l'inverse, lorsque le dispositif subit des efforts tendant à écarter les deux bagues, c'est la chambre 12₂ qui est comprimée entre les faces en regard des nervures 10a et 11a.

Comme cela apparaît sur la Figure 5, des jeux axiaux et radiaux sont prévus entre les deux bagues 10 et 11, de manière à autoriser les déplacements relatifs décrits ci-dessus entre ces deux bagues, en évitant tout contact entre celles-ci qui pourrait perturber le fonctionnement du dispositif suivant l'invention.

Ainsi, lors du lancement du satellite 4 (voir figure 1) et du fonctionnement des propulseurs auxiliaires 2 et 3, les surflux d'efforts subis localement en α₁ et α₂ par l'enveloppe du premier étage du lanceur, et qui se propagent jusqu'au dispositif suivant l'invention, ne sont pas transmis tels quels à la jupe 6 et au satellite 4, comme cela serait le cas s'il existait une liaison absolument rigide à la place du dispositif suivant l'invention.

En effet, si ce dispositif est installé, par exemple entre l'étage 5 et la grande base 6b de la jupe 6, la chambre 12₂ qui "voit" un surflux temporaire d'efforts localisé en un ou deux points (α₁ ou α₂) de sa périphérie, est mise en surpression dans tout son volume, sur toute sa périphérie, et le surflux localisé se trouve alors transformé, du fait du volume entièrement isobare de cette chambre, en un flux d'effort homogène réduit, également distribué sur toute la périphérie du dispositif. il en résulte une déformation axiale ou radiale bien moindre de la jupe, notamment au niveau de sa petite base supportant un satellite, ce qui protège l'intégrité de la structure de ce dernier.

On comprend qu'en réglant la pression de fluide dans les chambres 12₁ et 12₂ à différents niveaux prédéterminés, on peut doter sélectivement le dispositif suivant l'invention d'une rigidité, d'une souplesse ou d'une capacité d'amortissement d'efforts, adaptée à telle ou telle situation survenant pendant un lancement fonctionnement des propulseurs auxiliaires, génératrice de surflux d'efforts, séparation d'un étage propulseur ou de la coiffe, génératrice de chocs et/ou de vibrations, etc...

On a représenté schématiquement à la figure 11 des moyens de réglage de la pression du fluide contenu dans l'une quelconque des chambres 12₁ et 12₂ conçus pour un fluide incompressible tel qu'un mélange d'huile et d'azote liquide, par exemple. La chambre 12₁ ou 12₂ est remplie avec ledit fluide et communique sélectivement avec un réservoir 16 dudit fluide à travers une électrovanne 17 à deux voies. Au sol, la chambre 12₁ ou 12₂ est remplie avec ledit fluide incompressible et pressurisée par un volume de gaz 18 sous pression introduit dans le réservoir 16 à travers un clapet anti-retour 19. A titre d'exemple, la pression établie peut être de 45 bars.

En vol, l'électrovanne 17 peut être ouverte ou fermée. Fermée, elle isole les chambres 12₁,12₂ du réservoir 16 et les chambres, alors remplies d'un liquide incompressible, présentent une très forte rigidité qui convient cependant à l'absorption des surflux d'efforts subis par la structure du lanceur pendant le fonctionnement des propulseurs auxiliaires. Pour une séparation d'étage, ou de la coiffe 7, on peut programmer une ouverture temporaire de l'électrovanne 17 pour rétablir une communication entre les chambres et le réservoir. Le liquide contenu dans les chambres retrouve alors une capacité d'expansion dans le réservoir 16 du fait de la compressibilité du volume de gaz 18. Les chambres retrouvent alors une souplesse convenant à l'absorption des chocs et/ou des vibrations que l'on observe notamment pendant les séparations évoquées plus haut.

On remarquera que, grâce à l'utilisation d'un liquide, les moyens décrits ci-dessus peuvent donner au dispositif de suspension suivant l'invention une très grande rigidité tout en conservant une faculté d'absorption des surflux d'efforts. Ces moyens sont en outre très simples, avec une seule électrovanne.

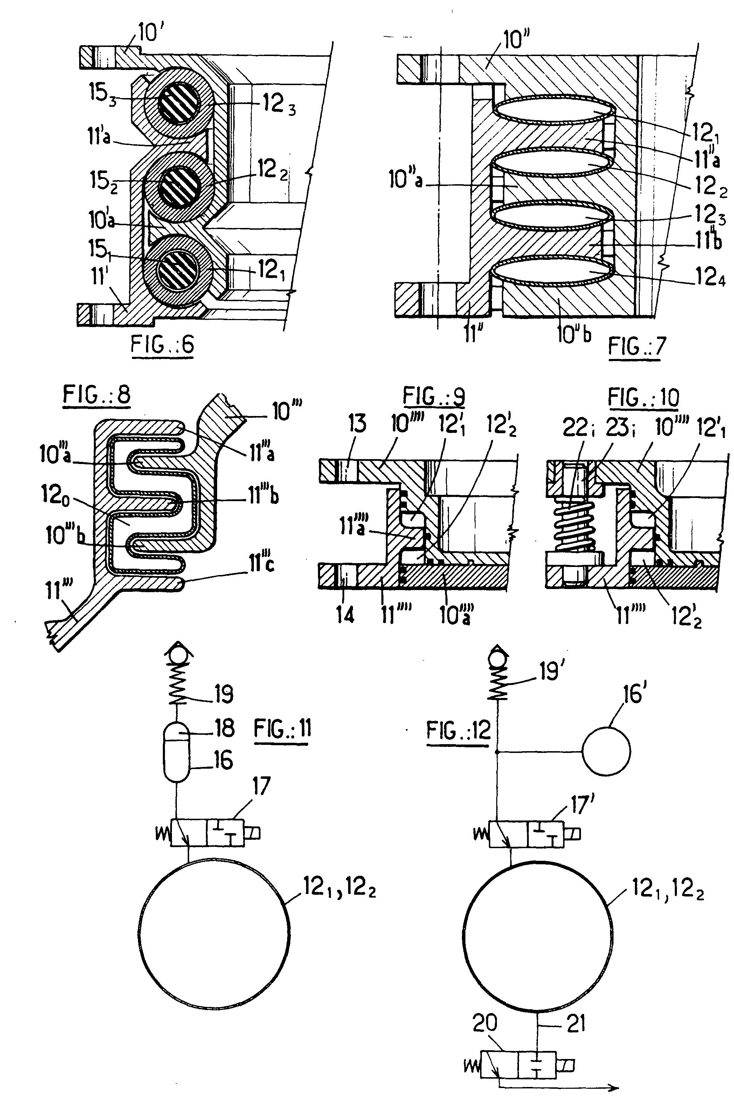

On a représenté schématiquement à la figure 12 un autre mode de réalisation des moyens de réglage de la pression du fluide, dans l'une ou l'autre des chambres annulaires 12₁ et 12₂, adaptés au cas où ce fluide est compressible. Ces moyens comprennent un réservoir 16' de gaz comprimé, par exemple de l'hélium à 45 bars, pour l'alimentation d'une chambre 12₁ (ou 12₂) à travers une électrovanne 17' à deux voies. Ces moyens permettent d'établir une pression de 45 bars, par exemple, dans la chambre annulaire, et de rétablir cette pression en cas de fuites par un apport de gaz à travers un clapet de remplissage anti-retour 19'.

Cette pression de 45 bars donne au dispositif suivant l'invention une forte rigidité qui convient pour suspendre fermement le satellite, ou la jupe adaptatrice qui le porte, tout en assurant une répartition des surflux d'efforts dus à la poussée des propulseurs auxiliaires 2 et 3, sur toute la circonférence du dispositif. On peut ainsi atteindre, en tout point de cette circonférence, des flux d'efforts inférieurs à 10 N/mm, en conformité avec le cahier des charges évoqué en préambule de la présente description.

En cas de chocs ou de vibrations à amortir, il convient de réduire la pression dans les chambres de manière à donner au dispositif suivant l'invention plus de souplesse, ou une capacité d'amortissement rapide des vibrations. Pour ce faire, les moyens de réglage de la pression dans les chambres 12₁ et 12₂ comprennent une deuxième électrovanne 20 à deux voies montée sur une ligne 21 de mise à l'air libre de la chambre correspondante. En commandant convenablement la durée d'ouverture de l'électrovanne 20, on peut abaisser la pression dans chacune des chambres 12₁,12₂ à une valeur prédéterminée convenable, 25 bars par exemple. C'est ainsi que, pendant une séquence de vol du lanceur, on pourra, à titre d'exemple illustratif et non limitatif seulement, régler la pression dans les chambres de la manière suivante :
- pendant le fonctionnement des propulseurs auxiliaires 2 et 3 : 45 bars ;
- pendant le fonctionnement de l'étage 1 : 45 bars ;
- lors du largage de la coiffe 7 : 25 bars ;
- lors du largage du premier étage : 25 bars ;
- pendant le vol du deuxième étage 5 : 45 bars.

Des tuyaux haute pression, garantis à 50 bars, convenant pour constituer les chambres 12₁ et 12₂ sont fabriqués par la société suisse GROWAG ou par la société française TITEFLEX.

Il apparaît maintenant que le dispositif suivant l'invention permet bien d'atteindre les buts fixés, à savoir protéger la structure relativement fragile qu'est le satellite des surflux d'efforts, des chocs et des vibrations qui affectent le lanceur pendant les diverses phases d'un lancement, tout en maintenant entre le lanceur et le satellite une liaison suffisamment rigide pour assurer le maintien de ce dernier.

Le dispositif suivant l'invention est également très sûr puisqu'une fuite de l'une ou l'autre des deux chambres, voire des deux, ne supprime pas la liaison des bagues 10 et 11, du fait de l'insertion de ces chambres entre les nervures 10a et 11a qui débordent de ces bagues.

On se réfère maintenant aux figures 6 à 8 où l'on a représenté des variantes du dispositif des figures 4 et 5, données seulement à titre d'exemple.

Le dispositif de la figure 6 comprend deux bagues rigides 10' et 11' munies de nervures 10'a et 11'a respectivement et trois chambres annulaires 12₁, 12₂ et 12₃ identiques et coaxiales. Quand les bagues 10' et 11' se rapprochent axialement l'une de l'autre sous l'action d'efforts circulant dans la structure du lanceur, les chambres extrêmes 12₁ et 12₃ sont comprimées. Quand les bagues 10' et 11' s'écartent axialement l'une de l'autre, c'est la chambre centrale 12₂ qui est comprimée, par pincement entre les nervures 10'a et 11'a.

Pour diminuer le volume de gaz contenu dans les chambres 12₁,12₂,12₃, et donc pour accroître la raideur du dispositif, on peut glisser dans celles-ci des corps cylindriques en matériau élastique, du caoutchouc par exemple, tels que 15₁,15₂,15₃ respectivement.

Le dispositif de la figure 7 comprend deux bagues 10" et 11" comprenant chacune deux nervures 10"a, 10"b et 11"a, 11"b respectivement, et quatre chambres annulaires 12₁,12₂,12₃,12₄. Les trois premières 12₁,12₂,12₃ fonctionnent comme les chambres correspondantes du mode de réalisation de la figure 6 et la quatrième (12₄) fonctionne comme la chambre 12₂. On remarque que ces chambres présentent une section droite ovalisée de petit axe parallèle à l'axe X de ces chambres. Cette forme, qui peut être obtenue par écrasement d'un tuyau de section circulaire, a pour avantage d'accroître la rigidité du dispositif de suspension suivant l'invention, et donc la fermeté du maintien des organes ou du satellite suspendus sur le dispositif.

Le dispositif de la figure 8 comporte deux éléments rigides annulaires 10''' et 11''' comprenant respectivement deux nervures 10'''a et 10'''b et trois nervures 11'''a, 11'''b et 11'''c, et une chambre à gaz unique 12₀ conformée de manière à s'imbriquer entre les deux éléments annulaires en suivant un profil de labyrinthe. La chambre présente plusieurs parties successives dont chacune est pincée entre deux faces en regard de deux nervures dépendant l'une de l'élément 10''', l'autre de l'élément 11'''. On comprend que les déplacements relatifs des bagues 10''' et 11''' sont contrés par des déformations élastiques des diverses parties de la chambre 12₀, qui fonctionnent chacune sensiblement comme les quatre chambres du dispositif de la figure 7.

La chambre 12₀ peut être réalisée par déformation d'un tuyau cylindrique souple, ou par moulage par extrusion d'un matériau suivant le profil de la section droite de cette chambre.

On se réfère maintenant à la figure 9 du dessin annexé, où l'on a représenté un deuxième mode de réalisation du dispositif suivant l'invention, comprenant des chambres annulaires à fluide 12₁,12'₂ dont les parois sont rigides et non souples.

On retrouve dans ce dispositif des bagues 10'''' et 11'''' analogues à celles des dispositifs décrits ci-dessus, et montées entre un satellite et une jupe adaptatrice à l'aide de boulons passant dans des trous 13 et 14, respectivement.

Les bagues 10'''' et 11'''' sont conformées pour coulisser axialement l'une sur l'autre tout en retenant un fluide dans les deux chambres annulaires 12'₁ et 12'₂ dont elles délimitent les parois.

Pour ce faire, les bagues 10'''' et 11'''' sont munies de nervures 10''''a et 11''''a respectivement, qui s'appuient sur les bagues 11'''' et 10'''' respectivement, avec des joints d'étanchéité convenables, de manière à délimiter les chambres 12'₁ et 12'₂, dont les volumes varient en sens inverse quand les bagues se rapprochent ou s'écartent axialement sous l'action d'efforts transmis, tout comme les chambres 12₁ et 12₂ du mode de réalisation de la figure 5. Le fonctionnement du dispositif de la figure 9 est ainsi analogue à celui de la figure 5.

Des essais ont montré cependant que les surflux d'efforts sont atténués plus efficacement par le dispositif de la figure 9 que par celui de la figure 5, et ce dans un facteur 10, environ.

La variante du dispositif de la figure 9 représentée à la figure 10 comporte, en plus, une pluralité de ressorts à boudin 22ᵢ interposés entre les bagues 10'''' et 11'''' sur des axes 23ᵢ pour filtrer les chocs, par exemple au niveau des trous 13,14, comme représenté. Pour le reste, cette variante est très conforme au dispositif représenté sur la figure 9.

Bien entendu, les dispositifs des figures 9 et 10 pourraient comporter plus de deux chambres, comme les dispositifs des figures 6 et 7 et être alors munis de nervures supplémentaires sur les bagues en regard.

De même, les dispositifs des figures 5 à 8 pourraient comprendre des ressorts amortisseurs de chocs, tout comme celui de la figure 10.

On peut réaliser ainsi, à titre d'exemple, un dispositif de suspension présentant un diamètre de 2,6 m et une hauteur de quelques centimètres, propre à une installation sur la base 6b de la jupe 6, pour protéger le satellite 4 fixé sur l'autre base 6a de la jupe.

Bien entendu, l'invention n'est pas limitée aux modes de réalisation décrits et représentés qui n'ont été donnés qu'à titre d'exemple.

C'est ainsi qu'on pourrait installer dans le dispositif suivant l'invention une chambre unique enroulée en plusieurs spires annulaires adjacentes, cette chambre remplaçant par exemple les empilements de chambres annulaires indépendantes des modes de réalisation des figures 5, 6 et 7.

C'est ainsi encore que le dispositif suivant l'invention pourrait être installé, dans un lanceur, ailleurs qu'à la base d'un satellite embarqué, par exemple entre deux autres éléments du lanceur, ou encore dans une structure porteuse telle qu'une jupe adaptatrice, avec un dispositif du type de celui représenté à la Figure 8, par exemple.

## Revendications

1. Dispositif de suspension d'une charge utile (4) dans un lanceur de ladite charge utile dans l'espace, comprenant
a) des moyens à fluide à géométrie variable (12ᵢ) aptes à être installés entre ledit lanceur et ladite charge utile et
b) des premier (10;10';10'';10''';10'''') et deuxième (11;11';11";11''';11'''') organes rigides aptes à être fixés, de part et d'autre desdits moyens (12ᵢ), à ladite charge utile (4) et au lanceur, respectivement, de manière à transmettre alors des efforts entre ceux-ci à travers lesdits moyens (12ᵢ), caractérisé en ce que lesdits moyens à fluide (12ᵢ) sont constitués par au moins une chambre annulaire.

2. Dispositif conforme à la revendication 1, caractérisé en ce que ladite chambre annulaire à fluide (12ᵢ) et lesdits premier (10; 10'; 10''; 10'''; 10'''') et deuxième (11;11'; 11"; 11'''; 11'''') organes rigides de couplage sont coextensifs et coaxiaux à un axe longitudinal (X) commun au lanceur et à la charge utile (4).

3. Dispositif conforme à la revendication 2, caractérisé en ce que lesdits premier (10;10';10";10''';10'''') et deuxième (11;11';11";11''';11'''') organes rigides annulaires de couplage comportent chacun au moins une nervure externe (10a;10'a;10"a;10"'a) et interne (11a;11'a;11"a;11'''a) respectivement, séparées axialement par ladite chambre à fluide annulaire (12ᵢ).

4. Dispositif conforme à l'une quelconque des revendications 1 à 3, caractérisé en ce que ladite chambre annulaire (12'₁,12'₂) est délimitée par des surfaces complémentaires desdits premier (10'''') et deuxième (11'''') organes mobiles, respectivement, ces organes étant mobiles l'un par rapport à l'autre suivant l'axe longitudinal (X) du lanceur.

5. Dispositif conforme à l'une quelconque des revendications 1 à 3, caractérisé en ce que ladite chambre annulaire (12ᵢ) est à paroi souple.

6. Dispositif conforme à la revendication 5, caractérisé en ce que les nervures (10'''a,10'''b; 11'''a,11'''b;11'''c) desdits premier (10''') et deuxième (11''') organes rigides annulaires s'imbriquent les unes dans les autres avec interposition de ladite chambre à fluide (12₀) entre les faces de chacune des paires de faces en regard desdites nervures imbriquées.

7. Dispositif conforme à l'une quelconque des revendications 5 et 6, caractérisé en ce qu'il comprend au moins des première (12₁) et deuxième (12₂) chambres à fluide annulaires superposées axialement, les nervures (10a, 11a) en regard des organes annulaires rigides (10,11) comprimant la première (12₁) ou la deuxième (12₂) chambre, respectivement, quand lesdits organes rigides subissent des efforts tendant à les rapprocher ou à les écarter l'un de l'autre, respectivement.

8. Dispositif conforme à la revendication 7, caractérisé en ce qu'il comprend au moins une troisième chambre à fluide (12₃) coaxiale aux deux autres (12₁,12₂), disposée symétriquement à la première (12₁) par rapport à la deuxième et fonctionnant comme la première.

9. Dispositif conforme à la revendication 8, caractérisé en ce qu'il comprend une quatrième chambre à fluide (12₄) coaxiale aux autres (12₁,12₂,12₃) et disposée symétriquement à la deuxième (12₂) par rapport à la troisième (12₃) et fonctionnant comme la deuxième.

10. Dispositif conforme à l'une quelconque des revendications 5 à 9, caractérisé en ce que lesdites chambres (12ᵢ) présentent une section droite ovalisée de petit axe parallèle à l'axe (X) desdites chambres.

11. Dispositif conforme à l'une quelconque des revendications 1 à 10, caractérisé en ce que lesdites chambres (12ᵢ) sont garnies intérieurement d'un matériau élastique (15ᵢ) réduisant le volume laissé libre par le fluide.

12. Dispositif conforme à l'une quelconque des revendications 1 à 11, caractérisé en ce que lesdites chambres renferment un fluide gazeux.

13. Dispositif conforme à l'une quelconque des revendications 1 à 12, caractérisé en ce que lesdites chambres renferment un fluide incompressible.

14. Dispositif conforme à la revendication 13, caractérisé en ce qu'il comprend des moyens (16',17',20) pour régler la pression du fluide gazeux dans au moins une chambre à fluide.

15. Dispositif conforme à la revendication 13, caractérisé en ce qu'il comprend des moyens (16,17) pour mettre sélectivement en communication au moins une chambre (12ᵢ) renfermant un fluide incompressible avec une capacité (15) contenant un fluide compressible (18).

16. Dispositif conforme à l'une quelconque des revendications 2 à 15, caractérisé en ce qu'il comprend une pluralité de ressorts (22ᵢ) interposés entre lesdits premier et deuxièmes organes rigides de manière à être comprimés quand lesdits organes sont poussés l'un vers l'autre suivant l'axe longitudinal (X) du lanceur.

17. Lanceur de charge utile dans l'espace, équipé du dispositif conforme à l'une quelconque des revendications 1 à 16.

18. Charge utile équipée d'un dispositif conforme à l'une quelconque des revendications 1 à 16, pour être montée dans un lanceur spatial.

## Patentansprüche

1. Vorrichtung zum Aufhängen einer Weltraumnutzlast (4) in einer Trägerrakete dieser Nutzlast, umfassend
a) Fluidmittel (12ᵢ) mit veränderlicher Geometrie, die zwischen der Trägerrakete und der Nutzlast eingebaut werden können, und
b) ein erstes (10;10';10";10''';10'''') und ein zweites (11;11';11'';11''';11'''') starres Organ, die zu beiden Seiten der Mittel (12ᵢ) an der Nutzlast (4) bzw. an der Trägerrakete so befestigt werden können, dass zwischen ihnen über diese Mittel (12ᵢ) Kräfte übertragen werden, dadurch gekennzeichnet, dass die Fluidmittel (12ᵢ) aus mindestens einer ringförmigen Kammer bestehen.

2. Vorrichtung nach Anspruch 1, dadurch gekennzeichnet, dass die ringförmige Fluidkammer (12ᵢ) und das erste (10;10';10"; 10''';10'''') und das zweite (11;11';11"; 11''';11'''') starre Kopplungsorgan koextensiv und zu einer der Trägerrakete und der Nutzlast (4) gemeinsamen Längsachse (X) koaxial sind.

3. Vorrichtung nach Anspruch 2, dadurch gekennzeichnet, daß das erste (10;10';10";10''';10'''') und das zweite (11;11'; 11''; 11'''; 11'''') starre ringförmige Kopplungsorgan jeweils mindestens eine Außenrippe (10a; 10'a; 10''a; 10'''a) bzw. eine Innenrippe (11a;11'a;11''a;11'''a) aufweisen, die axial durch die ringförmige Fluidkammer (12ᵢ) getrennt sind.

4. Vorrichtung nach einem der Ansprüche 1 bis 3, dadurch gekennzeichnet, daß die ringförmige Kammer (12'₁, 12'₂) durch ergänzende Flächen des ersten (10'''') bzw. des zweiten (11'''') beweglichen Organs abgegrenzt ist, wobei diese Organe in der Längsachse (X) der Trägerrakete zueinander beweglich sind.

5. Vorrichtung nach einem der Ansprüche 1 bis 3, dadurch gekennzeichnet, dass die ringförmige Kammer (12ᵢ) eine flexible Wand aufweist.

6. Vorrichtung nach Anspruch 5, dadurch gekennzeichnet, dass die Rippen (10'''a;10'''b;11'''a;11'''b;11'''c) des ersten (10''') und des zweiten (11''') starren ringförmigen Organs ineinandergreifen, wobei die Fluidkammer (12₀) zwischen die Seiten jedes der Paare von einander gegenüberstehenden Seiten der ineinandergreifenden Rippen eingesetzt ist.

7. Vorrichtung nach einem der Ansprüche 5 und 6, dadurch gekennzeichnet, daß sie mindestens eine erste (12₁) und eine zweite (12₂) ringförmige Fluidkammer aufweist, die axial übereinander angeordnet sind, wobei die einander gegenüberstehenden Rippen (10a,11a) der starren ringförmigen Organe (10,11) die erste (12₁) bzw. die zweite (12₂) Kammer komprimieren, wenn diese starren Organe Kräften ausgesetzt sind, die bestrebt sind, sie einander zu nähern bzw. voneinander zu entfernen.

8. Vorrichtung nach Anspruch 7, dadurch gekennzeichnet, dass sie mindestens eine dritte Fluidkammer (12₃) aufweist, die zu den beiden anderen (12₁,12₂) koaxial ist, bezüglich der zweiten zur ersten (12₁) symmetrisch ist und wie die erste arbeitet.

9. Vorrichtung nach Anspruch 8, dadurch gekennzeichnet, dass sie eine vierte Fluidkammer (12₄) aufweist, die zu den anderen (12₁,12₂,12₃) koaxial ist, bezüglich der dritten (12₃) zur zweiten (12₂) symmetrisch ist und wie die zweite arbeitet.

10. Vorrichtung nach einem der Ansprüche 5 bis 9, dadurch gekennzeichnet, dass die Kammern (12ᵢ) einen ovalen Querschnitt aufweisen, dessen kleine Achse zur Achse (X) der Kammern parallel ist.

11. Vorrichtung nach einem der Ansprüche 1 bis 10, dadurch gekennzeichnet, dass die Kammern (12ᵢ) innen mit einem elastischen Material (15ᵢ) ausgestattet sind, das das für das Fluid freigelassene Volumen reduziert.

12. Vorrichtung nach einem der Ansprüche 1 bis 11, dadurch gekennzeichnet, dass die Kammern ein gasförmiges Fluid enthalten.

13. Vorrichtung nach einem der Ansprüche 1 bis 12, dadurch gekennzeichnet, dass die Kammern ein unkomprimierbares Fluid enthalten.

14. Vorrichtung nach Anspruch 13, dadurch gekennzeichnet, dass sie Mittel (16',17',20) zum Regeln des Drucks des gasförmigen Fluids in mindestens einer Fluidkammer aufweist.

15. Vorrichtung nach Anspruch 13, dadurch gekennzeichnet, dass sie Mittel (16,17) zum wahlweisen Verbinden mindestens einer ein unkomprimierbares Fluid enthaltenden Kammer (12ᵢ) mit einem ein komprimierbares Fluid (18) enthaltenden Volumen (15) aufweist.

16. Vorrichtung nach einem der Ansprüche 2 bis 15, dadurch gekennzeichnet, dass sie eine Vielzahl von Federn (22ᵢ) aufweist, die zwischen das erste und das zweite starre Organ so eingesetzt sind, dass sie komprimiert werden, wenn die Organ in der Längsachse (X) der Trägerrakete aufeinander zu gedrückt werden.

17. Trägerrakete für eine Weltraumnutzlast, die mit einer Vorrichtung nach einem der Ansprüche 1 bis 16 ausgerüstet ist.

18. Nutzlast, die mit einer Vorrichtung nach einem der Ansprüche 1 bis 16 ausgerüstet ist, um in einer Trägerrakete montiert zu werden.

## Claims

1. System for suspending a payload (4) in a launch vehicle for launching said payload into space, comprising a) variable geometry fluid means (12ᵢ) suitable to be installed between said launch vehicle and said payload, and b) first rigid members (10; 10'; 10"; 10'''; 10'''') and second rigid members (11; 11'; 11"; 11"'; 11"") suitable to be fixed, on either side of said means (12ᵢ) to said payload (4) and to the launch vehicle, respectively, so as to transmit then forces between them via said means (12ᵢ), characterized in that said fluid means (12ᵢ) are made of at least one annular chamber.

2. System according to claim 1 characterised in that said annular fluid chamber (12ᵢ) and said first rigid coupling member (10; 10'; 10"; 10"'; 10"") and said second rigid coupling member (11; 11'; 11"; 11"'; 11"") are coextensive and coaxial with a longitudinal axis (X) common to the launch vehicle and the payload (4).

3. System according to claim 2 characterised in that said first rigid annular coupling member (10) and said second rigid annular coupling member (11) each have at least one external rib (10a; 10'a; 10"a; 10"'a) and one internal rib (11a; 11'a; 11"a; 11"'a), respectively, separated axially by said annular fluid chamber (12ᵢ).

4. System according to any one of claims 1 to 3 characterised in that said annular chamber (12'₁, 12'₂) is delimited by complementary surfaces of said first mobile member (10"") and said second mobile member (11""), respectively, and said members are mobile relative to each other along the longitudinal axis (X) of the launch vehicle.

5. System according to any one of claims 1 to 3 characterised in that said annular chamber (12ᵢ) has a flexible wall.

6. System according to claim 5 characterised in that the ribs (10"'a, 10"'b; 11"'a, 11"'b; 11"'c) of said first rigid annular member (10''') and said second rigid annular member (11''') are interleaved with each other with said fluid chamber (12₀) between the faces of each pair of facing faces of said interleaved ribs.

7. System according to claim 5 or claim 6 characterised in that it comprises at least one first annular fluid chamber (12₁) and one second annular fluid chamber (12₂) superposed axially, the ribs (10a, 11a) facing the rigid annular members (10, 11) respectively compressing the first chamber (12₁) or the second chamber (12₂) when said rigid members are respectively subjected to forces tending to move them closer together or farther apart.

8. System according to claim 7 characterised in that it comprises at least one third fluid chamber (12₃) coaxial with the other two (12₁, 12₂), disposed symmetrically with the first one (12₁) relative to the second one and functioning like the first one.

9. System according to claim 8 characterised in that it comprises a fourth fluid chamber (12₄) coaxial with the others (12₁, 12₂, 12₃) and disposed symmetrically with the second one (12₂) relative to the third one (12₃) and functioning like the second one.

10. System according to any one of claims 5 to 9 characterised in that said chambers (12ᵢ) have an oval cross-section with the shorter axis parallel to the axis (X) of said chambers.

11. System according to any one of claims 1 to 10 characterised in that said chambers (12ᵢ) are lined internally with an elastic material (15ᵢ) reducing the volume left free by the fluid.

12. System according to any one of claims 1 to 11 characterised in that said chambers contain a gaseous fluid.

13. System according to any one of claims 1 to 12 characterised in that said chambers contain an incompressible fluid.

14. System according to claim 13 characterised in that it comprises means (16', 17', 20) for adjusting the pressure of the gaseous fluid in at least one fluid chamber.

15. System according to claim 13 characterised in that it comprises means (16, 17) for selectively establishing communication between at least one chamber 12ᵢ containing an incompressible fluid and a tank (15) containing a compressible fluid (18).

16. System according to any one of claims 2 to 15 characterised in that it comprises a plurality of springs (22ᵢ) disposed between said first and second rigid members so as to be compressed when said members are pushed towards each other along the longitudinal axis (X) of the launch vehicle.

17. Launch vehicle for launching a payload into space equipped with the system according to any one of claims 1 to 16.

18. Payload equipped with a system according to any one of claims 1 to 16 for mounting it in a space launch vehicle.
